# NEUE EUROPÄISCHE PATENTSCHRIFT

(11) **EP 2 892 687 B2**
(45) Veröffentlichungstag und Bekanntmachung des Hinweises auf die Entscheidung über den Einspruch: **04.09.2019**
(45) Hinweis auf die Patenterteilung: 20.07.2016
(21) Anmeldenummer: 13777220.8
(22) Anmeldetag: 23.08.2013
(51) Int. Cl.: B23P 19/06, B21J 5/06, B21J 15/02, B23K 20/12, F16B 25/00, B29C 65/00, F16B 25/10, F16B 11/00, B29C 65/48, B29C 65/56, B29C 65/72

(54) **VERFAHREN ZUM VORLOCHFREIEN DIREKTVERSCHRAUBEN VON WENIGSTENS ZWEI BAUTEILEN UNTER EINSATZ EINES NIEDERHALTERS**
METHOD FOR DIRECTLY SCREWING TOGETHER AT LEAST TWO COMPONENTS WITHOUT A PILOT HOLE USING A HOLDING DOWN CLAMP
PROCÉDÉ POUR LE VISSAGE DIRECT SANS PRÉ-PERCER D'AU MOINS DEUX PIÈCES EN UTILISANT UN SERRE-FLAN

(30) Priorität: 07.09.2012 DE 102012215908
(43) Veröffentlichungstag der Anmeldung: 15.07.2015
(73) Patentinhaber: Bayerische Motoren Werke Aktiengesellschaft, 80809 München (DE)
(72) Erfinder: WILHELM, Maximilian Felix, 85461 Bockhorn (DE); FORSTER, Andreas, 92526 Oberviechtach (DE); KAISER, Manuel, 71277 Rutesheim (DE); SOMNITZ, Andreas, 75392 Deckenpfronn (DE)
(86) Internationale Anmeldenummer: PCT/DE2013/000488
(87) Internationale Veröffentlichungsnummer: WO 2014/036985

(56) Entgegenhaltungen:
- DE-A1- 10 348 427
- DE-A1- 19 752 367

## Beschreibung

Die Erfindung betrifft ein Verfahren zum Direktverschrauben von wenigstens zwei Bauteilen unter Verwendung einer loch- und gewindeformenden Schraube, wobei die Bauteile während des Einschraubvorgangs mittels eines Niederhalters aneinander gedrückt werden.

Ein solches Verfahren bzw. eine solche Vorrichtung ist aus der DE 103 48 427 A1, die den nächstliegenden Stand der Technik bildet, bekannt. Unter Direktverschrauben wird das Herbeiführen einer Schraubverbindung zwischen wenigstens zwei zu fügenden Bauteilen ohne das vorherige Einbringen von Löchern bzw. Bohrungen (so genannte Vorlöcher) in diese Bauteile verstanden. Beim Direktverschrauben entfällt sowohl der Aufwand für das Einbringen der Vorlöcher als auch der Aufwand für die Lochfindung beim Ausrichten der zu fügenden Bauteile.

Im Rahmen der Erfindung soll das Direktverschrauben mit einer loch- und gewindeformenden Schraube, die einen Kopf und einen am Kopf angeformten Schaft mit einem selbstformenden Gewindeabschnitt und einem Lochformungsabschnitt zum Fließlochformen aufweist, erfolgen. Beim so genannten fließlochformenden Verschrauben wird die speziell hierfür ausgebildete loch- und gewindeformende Schraube mit ihrem Lochformungsabschnitt an der Verbindungsstelle bzw. Einschraubstelle gegen die zu fügenden, zueinander ausgerichteten und nicht vorgelochten Bauteile gedrückt und in Drehung versetzt. Infolge der entstehenden Reibung wird die Verbindungsstelle lokal erwärmt, was eine Plastifizierung der Bauteilmaterialien ermöglicht, die hieraufhin in radialer Richtung und in axialer Richtung mit dem Lochformungsabschnitt plastisch verformt und schließlich durchdrungen werden. Hierbei wird zumindest an einem der zu fügenden Bauteile auch ein so genannter Durchzug (auch als Fließloch bezeichnet) ausgeformt, in den nachfolgend der selbstformende Gewindeabschnitt der loch- und gewindeformenden Schraube eingreift und eine kraft- und formschlüssige Verbindung zwischen den Bauteilen herbeiführt. In vorteilhafter Weise genügt eine einseitige Zugänglichkeit an der Verbindungsstelle.

Eine loch- und gewindeformende Schraube zum Fließlochformen ist aus der DE 39 09 725 C1 bekannt.

Beim Direktverschrauben, wie vorausgehend erläutert, kann es aufgrund der plastischen Verformung der Bauteilmaterialien zu einer unerwünschten und nachteiligen Spaltbildung zwischen den Bauteilen kommen. Um eine solche Spaltbildung zu verhindern, wird in der DE 103 48 427 A1 der Einsatz eines Niederhalters vorgeschlagen, der während des Einschraubvorgangs die Bauteile aneinander drückt. Durch die einwirkende Niederhalterkraft soll die Bildung eines Spalts zwischen den Bauteilen verhindert werden.

Der Erfindung liegt die Aufgabe zugrunde, ein Verfahren der eingangs genannten Art anzugeben, das neuen Anforderungen gerecht wird und das die mit dem Stand der Technik einhergehenden Nachteile nicht oder zumindest nur in einem verminderten Umfang aufweist.

Diese Aufgabe wird gelöst durch ein erfindungsgemäßes Verfahren mit den Merkmalen des Anspruchs 1.

Bevorzugte Weiterbildungen und Ausgestaltungen ergeben sich sowohl aus den jeweils abhängigen Ansprüchen als auch aus den nachfolgenden Erläuterungen.

Das erfindungsgemäße Verfahren zum vorlochfreien Direktverschrauben von wenigstens zwei Bauteilen unter Verwendung einer loch- und gewindeformenden Schraube die einen Kopf und einen am Kopf angeformten Schaft mit einem selbstformenden Gewindeabschnitt und einem Lochformungsabschnitt zum Fließlochformen aufweist, wobei die Bauteile während des Einschraubvorgangs bzw. Eindrehvorgangs mittels eines Niederhalters (an der Verbindungsstelle bzw. Einschraubstelle) aneinander gedrückt werden, sieht vor, dass die Kraft bzw. Niederhalterkraft, mit der der Niederhalter die Bauteile während des Einschraubvorgangs aneinander drückt, während des Einschraubvorgangs variiert wird.

Unter einer variierenden Niederhalterkraft wird verstanden, dass die Niederhalterkraft mit der der Niederhalter die Bauteile während des Einschraubvorgangs aneinander drückt bzw. aneinander presst, nicht konstant ist, sondern sich über dem Einschraubweg verändert, was insbesondere nach einem definierten bzw. voreingestellten Kraft-Weg-Profil erfolgt.

Die Idee hierbei ist, dass der Niederhalter nicht während des gesamten Einschraubvorgangs mit der maximal erforderlichen Niederhalterkraft bzw. Anpresskraft zur Verhinderung einer Spaltbildung gegen die Bauteile drückt, sondern nur zum richtigen Zeitpunkt bzw. während einer verhältnismäßig kurzen Zeitspanne, wodurch die Bauteile und insbesondere das obere Bauteil, auf das der Niederhalter unmittelbar (oder gegebenenfalls auch mittelbar) einwirkt, geschont werden. Hierdurch können insbesondere Bauteile aus empfindlichen Bauteilmaterialien bzw. Grundwerkstoffen geschont und Oberflächenbeschädigungen am oberen Bauteil verhindert oder zumindest minimiert werden.

Besonders bevorzugt ist vorgesehen, dass die Niederhalterkraft während der Ausbildung eines Fließlochs im unteren Bauteil am höchsten ist bzw. ihren Höchstwert (Maximum) erreicht, da in dieser Einschraubphase die Spaltbildungsneigung durch verdrängtes Bauteilmaterial besonders hoch ist. Die Niederhalterkraft kann aber auch zum Ende des Einschraubvorgangs ihr Maximum oder ein zweites Maximum erreichen, wie nachfolgend noch näher erläutert.

Bei den zu verschraubenden Bauteilen handelt es sich insbesondere um Einzelteile bzw. Baukomponenten für eine Kraftfahrzeugkarosserie, wie bspw. Bleche bzw. blechähnliche Gebilde und Profile (die als Halbzeuge oder als räumlich geformte Bauteile vorliegen können), sowie körperhafte Gebilde wie bspw. Gussteile und dergleichen.

Bevorzugt ist vorgesehen, dass das oberste Bauteil, auf dem der Niederhalter direkt aufsetzt, aus einem nichtmetallischen Material bzw. Werkstoff, wie bspw. aus einem faserverstärkten Kunststoff (FVK) und insbesondere aus einem kohlenstofffaserverstärkten Kunststoff (CFK) gebildet ist. Insbesondere hierfür erweist sich das erfindungsgemäße Verfahren als sehr vorteilhaft, da eine übermäßige zeitliche Druckbelastung am oberen Bauteil vermieden wird. Bevorzugt ist vorgesehen, dass die Niederhalterkraft während des Einschraubvorgangs nur dann maximal ist, wenn dies unbedingt zur Verhinderung einer Spaltbildung erforderlich ist und während den anderen Einschraubphasen einen niedrigeren Wert einnimmt und sogar den Wert Null (d. h. keine Niederhalterkraft) einnehmen kann. Durch einen Niederhalter können in diesem Fall ferner auch durch die loch- und gewindeformende Schraube herbeigeführte Schädigungen des oberen Bauteils, wie bspw. Materialausreißer und Materialabplatzungen, verhindert oder zumindest minimiert werden. Der Niederhalter kann somit eine Mehrfachwirkung haben.

Bevorzugter Weise kann die Niederhalterkraft während des Einschraubvorgangs im Bereich von 0 N bis 2000 N variiert werden. Bei einer Niederhalterkraft von 0 N werden die Bauteile an der Verbindungsstelle nicht zusammengedrückt. Die Niederhalterkraft kann auch einen Wert kleiner 0 N einnehmen, wodurch z. B. ein Zurückweichen des Niederhalters ermöglicht wird. Besonders bevorzugt ist vorgesehen, dass die Niederhalterkraft im Bereich von 100 N bis 2000 N und insbesondere im Bereich von mehr als 1000 N bis 2000 N variiert wird.

Ferner ist bevorzugt vorgesehen, dass der Niederhalter relativ eng, insbesondere so eng wie technisch machbar, um die Verbindungsstelle bzw. um die Einschraubstelle herum in einer insbesondere kreisringförmigen Fläche auf das obere Bauteil einwirkt. Hierbei ist besonders bevorzugt vorgesehen, dass die kreisringförmige Fläche möglichst groß ist, so dass die aus der aufgebrachten Niederhalterkraft resultierende Flächenpressung gering ausfällt und Schäden an den Bauteilen und insbesondere am oberen Bauteil (bspw. das Eindrücken des Niederhalters in die Oberfläche) verhindert oder zumindest minimiert werden. Eine große kreisringförmige Fläche ist bspw. dadurch gekennzeichnet, dass deren radiale Ringbreite (radialer Abstand zwischen dem Innenkreis und dem Außenkreis) dem 2- bis 10-fachen und insbesondere dem 3- bis 7-fachen des Kopfdurchmessers der verwendeten loch- und gewindeformende Schraube entspricht. Besonders bevorzugt ist vorgesehen, dass die kreisringförmige Fläche, insbesondere in Abhängigkeit vom Kopfdurchmesser der Schraube, einen Außendurchmesser im Bereich von 20 mm bis 60 mm aufweist. Die Kontaktfläche des Niederhalters kann auch mit einer anderen Form, d. h. nicht kreisringförmig, ausgebildet sein. Ferner kann der Niederhalter an seiner Kontaktfläche mit einer Schutzbeschichtung oder dergleichen zur Schonung der Bauteile und insbesondere des oberen Bauteils ausgebildet sein.

Bevorzugt ist vorgesehen, dass der Lochformungsabschnitt der loch- und gewindeformenden Schraube speziell für das Einbringen eines Lochs in das obere Bauteil ausgebildet ist. Das Einbringen eines Lochs in das obere Bauteil kann durch Formen bzw. Einformen (d. h. durch plastisches Materialverdrängen) und/oder durch Schneiden bzw. Einschneiden (d. h. Materialtrennen und/oder durch Zerspannen, Schaben, Reißen und dergleichen) erfolgen.

Besonders bevorzugt ist vorgesehen, dass die verwendete loch- und gewindeformende Schraube an ihrem Lochformungsabschnitt wenigstens eine Schneidkante oder dergleichen aufweist, die beim Drehen der Schraube in eine Drehrichtung das Einbringen bzw. Erzeugen und insbesondere Einschneiden eines Lochs, insbesondere in das obere Bauteil, ermöglicht und die beim Drehen der Schraube in die andere bzw. in die entgegengesetzte Drehrichtung das Fließlochformen, insbesondere im unteren Bauteil, zulässt. Die wenigstens eine Schneidkante am Lochformungsabschnitt ermöglicht durch Drehen der Schraube zunächst in eine Drehrichtung ein spanendes oder gegebenenfalls auch spannloses Erzeugen bzw. Ausbilden eines Lochs insbesondere in das obere Bauteil, wobei der Niederhalter hierbei eine unterstützende Funktion hat. Durch anschließendes Drehen der Schraube in die entgegengesetzte Drehrichtung kann mit dem selben Lochformungsabschnitt ein Fließloch insbesondere im unteren Bauteil ausgebildet werden, in das anschließend der selbstformende Gewindeabschnitt eingreifen kann, wie eingangs erläutert. Auf diese Weise können insbesondere auch Bauteile aus unterschiedlichen Materialen (bspw. FVK- bzw. CFK-Bauteile und Metallbauteile, wie nachfolgend noch näher erläutert) mechanisch gefügt werden (Mischbau).

Das obere Bauteil kann aus einem nichtmetallischen Material bzw. Werkstoff, vorzugsweise aus einem plastisch nicht oder nur schwer verformbaren Material und insbesondere aus einem spröden Material gebildet sein. Besonders bevorzugt ist das obere Bauteil aus einem faserverstärkten Kunststoff (FVK) und insbesondere aus einem kohlenstofffaserverstärkten Kunststoff (CFK) gebildet, wie oben beschrieben. Das untere Bauteil kann aus einem metallischen Material und vorzugsweise aus einem plastisch verformbaren bzw. duktilen Bauteilmaterial gebildet sein. Besonders bevorzugt ist das untere Bauteil aus Aluminium oder Stahl gebildet.

Die zu verschraubenden Bauteile können zumindest im Bereich der Einschraubstelle zusätzlich miteinander verklebt werden. Gerade hier erweist die Direktverschraubung als besonders vorteilhaft, da besondere Vorkehrungen nicht erforderlich sind, wie bspw. das Freihalten eines Vorlochbereichs von Klebstoff, was zu einer Unterbrechung der Klebenaht oder Klebefläche und somit zu Festigkeits- und/oder Haltbarkeitseinbußen führt. Auch eine Verschmutzung der Fertigungsanlage bzw. deren Werkzeuge durch austretenden Klebstoff entfällt. Durch den Einsatz eines Niederhalters, wie vorgeschlagen, kann zudem die Festigkeit und/oder Beständigkeit der zwischen den Bauteilen herbeigeführten Klebeverbindung verbessert werden. Hierfür kann es vorteilhaft sein, dass die Niederhalterkraft zum Ende des Einschraubvorgangs nochmals erhöht wird oder ihr Maximum erreicht. Dadurch kann ein so genanntes Aufatmen der Bauteile unter Ausbildung eines Spalts wirkungsvoll verhindert werden.

Eine Vorrichtung zur Durchführung des erfindungsgemäßen Verfahrens umfasst zumindest:
- eine Schraubspindel, mit der während des Einschraubvorgangs auf die einzuschraubende loch- und gewindeformende Schraube eine Druckkraft und ein Drehmoment, mit einer damit einhergehenden Drehung der Schraube, aufgebracht werden kann; und
- einen Niederhalter, der derart ausgebildet ist, dass dieser während des Einschraubvorgangs eine variable Niederhalterkraft auf das obere Bauteil aufbringen kann.

Bevorzugt ist vorgesehen, dass die Vorrichtung wenigstens einen einstellbaren bzw. steuerbaren Stellantrieb für den Niederhalter aufweist, der der Erzeugung einer Niederhalterbewegung und/oder einer Niederhalterkraft dient. Bevorzugt handelt es sich um einen elektromechanischen Stellantrieb. Anstelle eines elektromechanischen Stellantriebs kann alternativ oder ergänzend auch ein hydraulischer und/oder pneumatischer Stellantrieb vorgesehen sein. Insbesondere ist vorgesehen, dass dieser Stellantrieb zur Einstellung bzw. Steuerung oder Veränderung der Niederhalterkraft während des Einschraubvorgangs durch eine zur Vorrichtung gehörende Steuereinrichtung elektronisch oder gegebenenfalls auch hydraulisch oder pneumatisch steuerbar ist.

Ferner kann während des Einschraubvorgangs auch eine Regelung der Niederhalterkraft und/oder der Drehgeschwindigkeit bzw. Drehzahl der Schraubspindel vorgesehen sein. Die Niederhalterkraft kann während des Einschraubvorgangs auch in Abhängigkeit der axial wirkenden Schraubkraft (dies ist die beim Einschraubvorgang von der Schraubspindel in axialer Richtung auf die Schraube aufgebrachte Druckkraft) eingestellt bzw. geregelt werden, wobei die axial wirkende Schraubkraft (auch als Bitkraft bezeichnet) während des Einschraubvorgangs selbst variabel und insbesondere gesteuert oder geregelt sein kann.

Ferner ist bevorzugt vorgesehen, dass die Schraubspindel und insbesondere auch deren Antriebseinrichtungen, neben der Möglichkeit zur Variierung der Drehzahl und/oder des auf die Schraube aufgebrachten Drehmoments, für einen wahlweisen Rechts-Links-Lauf bzw. für eine Drehrichtungsumkehr und insbesondere für einen schnellwechselnden Rechts-Links-Lauf ausgelegt bzw. ausgebildet ist/sind. Die Drehzahl der Schraubspindel liegt bevorzugt im Bereich von 100 bis 7000 Umdrehungen pro Minute und kann in diesem Bereich auch verändert und/oder geregelt werden.

Die Erfindung wird nachfolgend anhand einer schematischen und nicht maßstabsgetreuen Figur beispielhaft und in nicht einschränkender Weise näher erläutert. Die in der Figur gezeigten und/oder nachfolgend erläuterten Merkmale können, unabhängig von konkreten Merkmalskombinationen, allgemeine Merkmale der Erfindung sein.

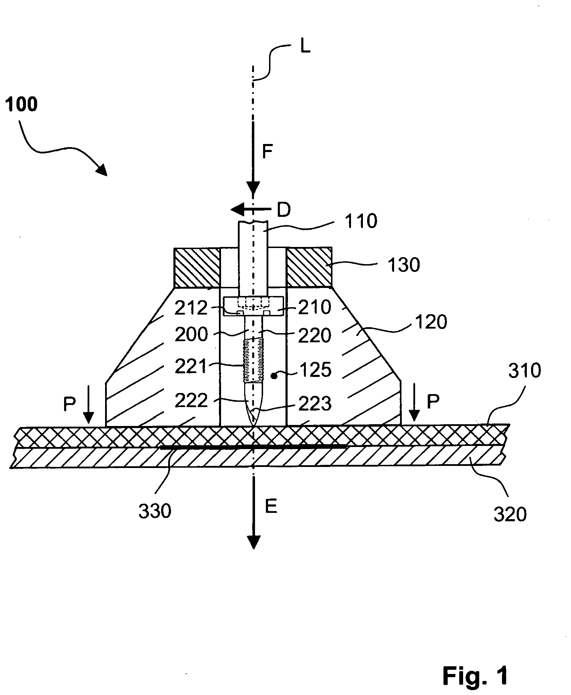

- Fig. 1: zeigt eine Vorrichtung in einer schematischen Schnittansicht.

Fig. 1 zeigt eine Vorrichtung 100 zum Direktverschrauben von wenigstens zwei Bauteilen 310 und 320 unter Verwendung einer loch- und gewindeformenden Schraube 200. Die Schraube 200 weist einen Kopf 210 und einen am Kopf 210 angeformten Schaft bzw. Bolzen 220 auf. Am Schaft 220 ist ein selbstformender Gewindeabschnitt 221 ausgebildet. Bei dem selbstformenden Gewindeabschnitt 221 handelt es sich insbesondere um einen selbstfurchenden (oder alternativ um einen selbstschneidenden) Gewindeabschnitt. Im Bereich seines freien axialen Endes ist der Schafts 220 mit einem Lochformungsabschnitt 222 zum Fließlochformen ausgebildet. Der Lochformungsabschnitt 222 weist eine abgerundete Schraubenspitze und mehrere Schneidkanten 223 auf.

Das obere Bauteil 310 (erster Fügepartner) ist aus einem faserverstärkten Kunststoff wie bspw. einem kohlenstofffaserverstärkten Kunststoff gebildet. Das untere Bauteil 320 (zweiter Fügepartner) ist aus einem Aluminiummaterial oder einem Stahlmaterial gebildet. Die gezeigte blechähnliche Gestalt ist nur beispielhaft. Mit 330 ist eine optionale Klebstoffschicht zwischen den Bauteilen 310 und 320 an der Verbindungs- bzw. Einschraubstelle bezeichnet.

Die Vorrichtung 100 umfasst eine Schraubspindel 110, mit der auf die in die Bauteile 310 und 320 einzuschraubende loch- und gewindeformende Schraube 200 eine Druckkraft F und ein Drehmoment, mit einer damit einhergehenden Drehung mit der Drehrichtung D (Rechtslauf), aufgebracht werden kann. Die Schraubspindel 110 kann auch der Halterung und/oder der Fixierung der Schraube 200 beim Vorbereiten des Einschraubvorgangs dienen. Die Kraftbeaufschlagung und der Drehantrieb der Schraubspindel 110 können mit nicht dargestellten Antriebseinrichtungen (bspw. mit einem Elektromotor und einer Vorschubeinheit) erfolgen.

Die Vorrichtung 100 umfasst ferner einen Niederhalter 120, der während des Einschraubvorgangs die Bauteile 310 und 320 aneinander bzw. gegeneinander drückt, wozu der Niederhalter 120 insbesondere in einer kreisringförmigen Fläche eng um die Verbindungsstelle bzw. Einschraubstelle herum auf das obere Bauteil 310 einwirkt. Die hülsenartige Innenausnehmung 125 im Niederhalter 120 kann, insbesondere beim Vorbereiten des Einschraubvorgangs, der Führung der Schraube 200 dienen. In dieser Innenausnehmung wird aber auch die Schraubspindel 110 zumindest während des Einschraubvorgangs aufgenommen und axial geführt.

Der Niederhalter 120 kann ein- oder mehrteilig ausgebildet sein. Eine mehrteilige Ausgestaltung des Niederhalters 120 ermöglicht eine einfache Anpassung an verschiedene Schraubentypen und Einschraubprozesse. Mit 130 ist ein Stellantrieb für den Niederhalter 120 bezeichnet, der zur Erzeugung einer Niederhalterbewegung und/oder einer Niederhalterkraft P, mit der der Niederhalter 120 auf das obere Bauteil 310 gedrückt wird, dient. Insbesondere handelt es sich um einen elektromechanischen oder gegebenenfalls auch um einen pneumatischen oder hydraulischen Stellantrieb 130. Eine zur Vorrichtung 100 gehörende Matrize oder dergleichen, auf der das untere Bauteil 320 während des Einsschraubvorgangs aufliegen kann, ist nicht dargestellt. Ferner kann der Niederhalter 120 an seiner die Kontaktfläche bildenden Unterseite mit einer Schutzabdeckung, Schutzbeschichtung oder dergleichen (bspw. einem Elastomer oder dergleichen), versehen sein, um das obere Bauteil 310 zu schonen.

Die in Fig. 1 gezeigte Darstellung zeigt den Beginn des Einschraubvorgangs. Die Einschraubrichtung ist mit E angegeben. Durch axiales Andrücken der Schraube 200 mit der Kraft F an das obere Bauteil 310 und durch gleichzeitiges Drehen D (im Rechtslauf) der Schraube 200 um die Längs- bzw. Einschraubachse L wird an der Einschraubstelle bzw. Verbindungsstelle Reibungswärme erzeugt. Die hierdurch erhöhte Temperatur an der Einschraubstelle ermöglicht das vorlochfreie Durchdringen der Bauteile 310 und 320 mit dem konischen bzw. kegelförmigen Lochformungsabschnitt 222, wobei an der Austrittsseite des unteren Bauteils 320 aufgrund der plastischen Materialeigenschaften ein Durchzug bzw. Fließloch ausgebildet wird. Nach dem Ausformen des Durchzugs wird in das untere Bauteil 320 mittels des selbstformenden Gewindeabschnitts 221 ein Gewinde eingeformt. Durch weiteres Eindrehen der Schraube 200 kann nun eine mechanische Verbindung bzw. Schraubverbindung zwischen den Bauteilen 310 und 320 hergestellt werden. Abschließend wird durch ein Anziehen der Schraube 200 mit einem definierten Drehmoment der Einschraubvorgang abgeschlossen, wobei die Verbindungsstelle im Folgenden noch auskühlt, wobei sich das im unteren Bauteil 320 eingeformte Gewinde besonders dicht an den selbstformenden Gewindeabschnitt 221 der Schraube 200 anlegt. Die axiale Andrück- bzw. Vorschubkraft F, das Drehmoment und/oder die Drehgeschwindigkeit werden typischerweise während des Einschraubvorgangs variiert.

Die einzelnen Phasen des Einschraubvorgangs sind anschaulich auch in der DE 103 48 427 A1 erläutert. Im Übrigen kann es auch zu einem Gewindeeingriff zwischen der Schraube 200 und dem oberen Bauteil 310 kommen. Um aufsteigendes Bauteilmaterial aufzunehmen kann der Kopf 210 der Schraube 200 an seiner Unterseite mit einer den Schaft 220 umlaufenden Nut (bzw. Ausnehmung oder Unterkopfnut) 212 ausgebildet sein.

Es kann vorgesehen sein, dass die Schraube 200 an ihrem Lochformungsabschnitt 222 mit wenigstens einer Schneidkante 223 ausgebildet ist, die das Einbringen und insbesondere Einschneiden eines Lochs in das obere Bauteil 310 durch Drehen der Schraube 200 in die entgegengesetzte Drehrichtung -D (d. h. im Linkslauf) ermöglicht. In etwa dann, wenn die Schraubenspitze am Lochformungsabschnitt 222 auf das untere Bauteil 320 trifft, wird die Drehrichtung umgekehrt und der weitere Einschraubvorgang erfolgt wie obenstehend erläutert (d. h. im Rechtslauf). Rechts- und Linkslauf können hierbei auch vertauscht sein. Die Spindeleinrichtung 110 und deren Antriebseinrichtungen sind hierzu für einen Rechts-Links-Lauf bzw. zur Drehrichtungsumkehr ausgelegt.

Um während des Einschraubvorgangs eine Spaltbildung zwischen den Bauteilen 310 und 320 zu vermeiden ist der Niederhalter 120 vorgesehen, wobei erfindungsgemäß die mit dem Niederhalter 120 auf das obere Bauteil 310 zum Zwecke des Aneinanderdrückens der Bauteile 310 und 320 aufgebrachte Niederhalterkraft P variiert, d. h. nicht konstant ist. Der Niederhalter 120 wird also nicht während des gesamten Einschraubvorgangs mit der maximal erforderlichen Niederhalterkraft bzw. Anpresskraft P zur Verhinderung einer Spaltbildung gegen das obere Bauteil 310 gedrückt, sondern nur zum richtigen Zeitpunkt bzw. während einer verhältnismäßig kurzen Zeitspanne.

Bevorzugt ist vorgesehen, dass die Niederhalterkraft P während der Ausbildung des Fließlochs im unteren Bauteil 320 am höchsten ist bzw. ihren Höchstwert (Maximum) erreicht, da in dieser Einschraubphase die Spaltbildungsneigung besonders hoch ist. Die Niederhalterkraft P kann aber auch zum Ende des Einschraubvorgangs ihr Maximum oder ein zweites Maximum erreichen, was insbesondere dann von Vorteil ist, wenn die Bauteile 310 und 320 zusätzlich verklebt werden, wie obenstehend erläutert. Der Stellantrieb 130 ist für die Erzeugung einer variierenden Niederhalterkraft P ausgelegt. Die Steuerung einer variierenden Niederhalterkraft P kann durch eine nicht gezeigte Steuereinrichtung bewerkstelligt werden, wobei insbesondere eine elektronische oder gegebenenfalls auch eine pneumatische oder hydraulische Steuerung vorgesehen ist.

Mit dem erfindungsgemäßen Verfahren können z. B. mechanische Mischbauverbindungen aus faserverstärkten Kunststoffen (FVK) und insbesondere aus kohlenstofffaserverstärkten Kunststoffen (CFK) mit Metallmaterialien mittels Direktverschraubung ohne Vorlochen hergestellt werden (obgleich ein Vorlochen durchaus auch möglich ist). Darüber hinaus werden Beschädigungen an den FVK- bzw. CFK-Bauteilen verhindert oder zumindest minimiert. D. h. die Anbindung von FVK- bzw. CFK-Bauteilen an Stahl- und Aluminiumbauteile (oder dergleichen) mittels vorlochfreier mechanischer Fügetechnik wird ermöglicht. Im Gegensatz zu vielen anderen Fügetechniken ist die einseitige Zugänglichkeit ausreichend.

Mit dem erfindungsgemäßen Verfahren können auch mehr als zwei Bauteile gefügt werden. Ferner ist die Erfindung nicht auf die beschriebenen Bauteilmaterialien bzw. -werkstoffe und Materialkombinationen beschränkt.

## Patentansprüche

1. Verfahren zum Direktverschrauben von wenigstens zwei Bauteilen (310, 320) unter Verwendung einer loch- und gewindeformenden Schraube (200) die einen Kopf (210) und einen am Kopf (210) angeformten Schaft (220) mit einem selbstformenden Gewindeabschnitt (221) und einem Lochformungsabschnitt (222) zum Fließlochformen aufweist, wobei die Bauteile (310, 320) während des Einschraubvorgangs mittels eines Niederhalters (120) aneinander gedrückt werden,
**dadurch gekennzeichnet, dass**
die Niederhalterkraft (P), mit der der Niederhalter (120) die Bauteile (310, 320) während des Einschraubvorgangs aneinander drückt, variiert wird.

2. Verfahren nach Anspruch 1,
**dadurch gekennzeichnet, dass**
das obere Bauteil (310), auf dem der Niederhalter (120) direkt aufsetzt, aus einem nichtmetallischen Material, vorzugsweise aus einem faserverstärkten Kunststoff und insbesondere aus einem kohlenstofffaserverstärkten Kunststoff gebildet ist.

3. Verfahren nach Anspruch 1 oder 2,
**dadurch gekennzeichnet, dass**
die Niederhalterkraft (P) während der Ausbildung eines Fließlochs im unteren Bauteil (320) am höchsten ist.

4. Verfahren nach einem der vorausgehenden Ansprüche,
**dadurch gekennzeichnet, dass**
die Niederhalterkraft (P) während des Einschraubvorgangs im Bereich von 0 N bis 2000 N variiert wird.

5. Verfahren nach einem der vorausgehenden Ansprüche,
**dadurch gekennzeichnet, dass**
der Niederhalter (120) relativ eng um die Einschraubstelle herum in einer kreisringförmigen Fläche auf das obere Bauteil (310) einwirkt.

6. Verfahren nach einem der vorausgehenden Ansprüche,
**dadurch gekennzeichnet, dass**
die verwendete loch- und gewindeformende Schraube (200) an ihrem Lochformungsabschnitt (222) wenigstens eine Schneidkante (223) aufweist, die beim Drehen der Schraube (200) in eine Drehrichtung (-D) das Einbringen eines Lochs ermöglicht und die beim Drehen der Schraube in die andere Drehrichtung (D) das Fließlochformen zulässt.

7. Verfahren nach einem der vorausgehenden Ansprüche,
**dadurch gekennzeichnet, dass**
die Bauteile (310, 320) zumindest im Bereich der Einschraubstelle zusätzlich miteinander verklebt werden.

## Claims

1. A method for directly screwing together at least two components (310, 320) using a hole-forming and thread-forming screw (200) which has a head (210) and a shank (220), formed integrally with the head (210), with a self-forming threaded portion (221) and a hole forming portion (222) for flow drilling, wherein the components (310, 320) are pressed against one another by a hold-down clamp (120) during the screwing-in procedure,
**characterised in that**
the hold-down force (P) by which the hold-down clamp (120) presses the components (310, 320) against one another during the screwing-in procedure is varied.

2. A method according to claim 1,
**characterised in that**
the upper component (310) on which the hold-down clamp (120) is directly placed is formed from a non-metallic material, preferably from a fibre-reinforced plastics material and especially from a carbon fibre-reinforced plastics material.

3. A method according to claim 1 or claim 2,
**characterised in that**
the hold-down force (P) is highest during the formation of a flow hole in the lower component (320).

4. A method according to any one of the preceding claims,
**characterised in that**
the hold-down force (P) is varied within a range of 0 N to 2000 N during the screwing-in procedure.

5. A method according to any one of the preceding claims,
**characterised in that**
the hold-down clamp (120) acts on the upper component (310) in a circularly annular area relatively closely around the screw-in point.

6. A method according to any one of the preceding claims,
**characterised in that**
the hole-forming and thread-forming screw (200) which is used has on its hole forming portion (222) at least one cutting edge (223) which allows a hole to be made when the screw (200) is turned in one rotational direction (-D) and allows flow drilling when the screw is turned in the other rotational direction (D).

7. A method according to any one of the preceding claims,
**characterised in that**
the components (310, 320) are also adhesively bonded together at least in the region of the screw-in point.

## Revendications

1. Procédé de vissage direct d'au moins deux pièces (310, 320) en utilisant une vis perceuse et taraudeuse (200) qui comporte une tête (210) et une tige (220) formée sur la tête (210) et comprenant un segment fileté auto-taraudeur (221) et un segment perceur (222) destinés au fluotournage, les pièces (310, 320) étant serrées l'une contre l'autre au moyen d'un serre-flan (120) pendant le processus de vissage,
**caractérisé en ce que**
la force (P) avec laquelle le serre-flan (120) serre les pièces (310, 320) l'une contre l'autre pendant le processus de vissage est variable.

2. Procédé conforme à la revendication 1,
**caractérisé en ce que**
la pièce supérieure (310) sur laquelle s'appuie directement le serre-flan (120) est réalisée en un matériau non métallique, de préférence un matériau synthétique renforcé par des fibres et en particulier un matériau synthétique renforcé par des fibres de carbone.

3. Procédé conforme à la revendication 1 ou 2,
**caractérisé en ce que**
la force (P) exercée par le serre-flan est la plus élevée pendant la formation d'un trou par fluage dans la pièce inférieure (320).

4. Procédé conforme à l'une des revendications précédentes,
**caractérisé en ce que**
la force (P) exercée par le serre-flan pendant le processus de vissage varie dans la plage de 0 N à 2000 N.

5. Procédé conforme à l'une des revendications précédentes,
**caractérisé en ce que**
le serre-flan (120) agit sur la pièce supérieure (310) relativement étroitement autour de l'emplacement de vissage dans une surface annulaire.

6. Procédé conforme à l'une des revendications précédentes,
**caractérisé en ce que**
la vis perceuse et taraudeuse (200) utilisée comporte, sur son segment perceur (222) au moins une arête de coupe (223) qui permet la formation d'un trou, lors de la rotation de la vis (200) dans un sens de rotation (-D), et autorise le fluotournage lors de la rotation de la vis dans l'autre sens de rotation (D).

7. Procédé conforme à l'une des revendications précédentes,
**caractérisé en ce que**
les pièces (310, 320) sont en outre collées l'une à l'autre au moins dans la zone de l'emplacement de vissage.
